# EUROPEAN PATENT APPLICATION

(11) **EP 4 663 390 A1**
(43) Date of publication of application: **17.12.2025**
(21) Application number: 25181893.6
(22) Date of filing: 10.06.2025
(51) Int. Cl.: B29C 65/08, B29C 65/56, B29C 65/60, B29C 65/00, B29L 31/30

(54) **REINFORCEMENT RETENTION WITH PLASTIC WELDING FOR TP LIFTGATES**

(30) Priority: 10.06.2024 US 202463658251 P
(71) Applicant: Magna Exteriors Inc., Aurora ON L4G 7K1 (CA)
(72) Inventor: Kuntze, Christopher J., Goodrich, Michigan, 48438 (US); Wang, Yao, Troy, Michigan, 48083 (US); Gillard, Laurent, Beverly Hills, Michigan, 48025 (US); Chaaya, Riad, Clarkston, Michigan, 48348 (US); Tichy, Stanislav, Troy, Michigan, 48085 (US)
(74) Representative: Witte, Weller & Partner Patentanwälte mbB

(57) **Abstract**

A vehicle closure structure (such as a liftgate door, trunk door, frunk door, vehicle hood or the like); which requires a mechanical reinforcement of an area (such as a door latch, hinge, lift cylinder, spoiler attachment or the like). The closure has at least one thermoplastic or thermoset boss which is extending through an orifice in a support member which is ultrasonically mushroom welded for securing the support member to the vehicle closure structure.

## Description

### FIELD OF THE INVENTION

The present invention relates to a reinforcement retention with plastic welding for TP (thermoplastic) liftgates.

### BACKGROUND OF THE INVENTION

TP closure modules and such structures in vehicles and automobiles, have turned away from full metallic structures, and have recently turned to alternate materials such as thermoplastics, and in doing so there are efficiencies for weight savings, improved fuel economy, corrosion resistance, improved styling, cost savings and the like. However, a closure module still needs extra structure in high load areas such as the hinges, latch, and counterbalance lift assist such as ball studs for gas struts, thus these areas typically have metallic reinforcements. The metallic reinforcements need to be attached to the main panels, and this often drives complexity and cost up, by utilizing extra fasteners, adhesives, over molding or other processes for adding support to these areas.

Adhesive can be utilized to bond reinforcement brackets to inner panel, but this adds cost and complexity to the assembly process, increases capital investment, increases the piece price, increases cycle time, and increases floor space.

Over molding can be utilized to secure reinforcement brackets to inner panel, but this adds cost and complexity to the tooling process, increases the piece price, increases cycle time, and restricts design freedom, and requires tight tolerances.

Mechanical fasteners can be utilized to secure reinforcement brackets to inner panel, but this adds cost and complexity to the tooling and assembly process, adds fasteners and part numbers, increases the piece price, increases cycle time, and restricts design freedom, can create build issues due to variation and errors, and increases labor and cost.

These past ways of attaching a reinforcement bracket drives up the total cost of a liftgate assembly.

Therefore, it is a goal in the art to lower reinforcement bracket retention cost, while not degrading performance of the bracket retention.

### SUMMARY OF THE INVENTION

A vehicle closure structure (such as a liftgate door, trunk door, frunk door, vehicle hood or the like); which requires a mechanical reinforcement of an area (such as a door latch, hinge, lift cylinder, spoiler attachment or the like). The closure has at least one thermoplastic or thermoset boss which is extending through an orifice in a support member which is ultrasonically mushroom welded for securing the support member to the vehicle closure structure. A unique boss design and sonotrode design will need to keep the metallic sonotrode isolated and avoid contact with the metallic reinforcement to allow proper ultrasonic welding.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1 is a sectional view showing a vehicle closure reinforcement structure prior to final attachment of a reinforcement;
Fig. 1a is the view of Figure 1 showing the boss attachment of the reinforcement;
Fig. 2 is a top view of various boss attachments useful in the present invention;
Fig. 3 is a sectional view showing an alternate embodiment of a vehicle closure reinforcement structure prior to final attachment of a reinforcement;
Fig. 3a is the view of Figure 3 showing the boss final attachment of the reinforcement;
Fig. 4 is a sectional view showing an alternate embodiment of a vehicle closure reinforcement structure prior to final attachment of a reinforcement;
Fig. 4a is the view of Figure 4 showing the boss final attachment of the reinforcement;
Fig. 5 is a sectional view showing an alternate embodiment of a vehicle closure reinforcement structure prior to final attachment of a reinforcement;
Fig. 5a is the view of Figure 5 showing the boss final attachment of the reinforcement;
Fig. 6 is a sectional view of the process of ultrasonically welding the boss using the boss as a sonotrode insulating collar;
Fig. 7 is a sectional view similar to Figure 6 but in this case the sonotrode sets the height for attaching the boss; and
Fig. 8 is a view similar to Figure 7 but showing an isolation seal on the sonotrode for insulating it against touching of the metallic reinforcement.

### DETAILED DESCRIPTION OF THE PREFERRED EMBODIMENTS

The following description of the preferred embodiment(s) is merely exemplary in nature and is in no way intended to limit the invention, its application, or uses. Ultrasonic thermal setting of bosses to secure reinforcement brackets to the inner panel can be performed in a station that utilizes minimum floor space, eliminates the need for consumables such as mechanical fasteners and adhesive, speeds up the cycle time, does not require time to apply adhesive or drying time to acquire green strength, is automated and requires minimum manpower, and reduces the chance of part tolerance variation, and reduces the risk of mis builds.

A vehicle closure structure generally shown at 10 (such as a liftgate door, trunk door, frunk door, vehicle hood or the like); which requires a mechanical reinforcement of an area 12 (such as a door latch, hinge, lift cylinder, spoiler attachment or the like) comprising at least one thermoplastic or thermoset molded boss 14 on the vehicle closure structure 10 and extending through an orifice 16 in a support member 18. The molded boss 14 is ultrasonically, thermally or otherwise deformed for securing the support member 18 to the vehicle closure structure 10 here a plastic or polymer panel 20.

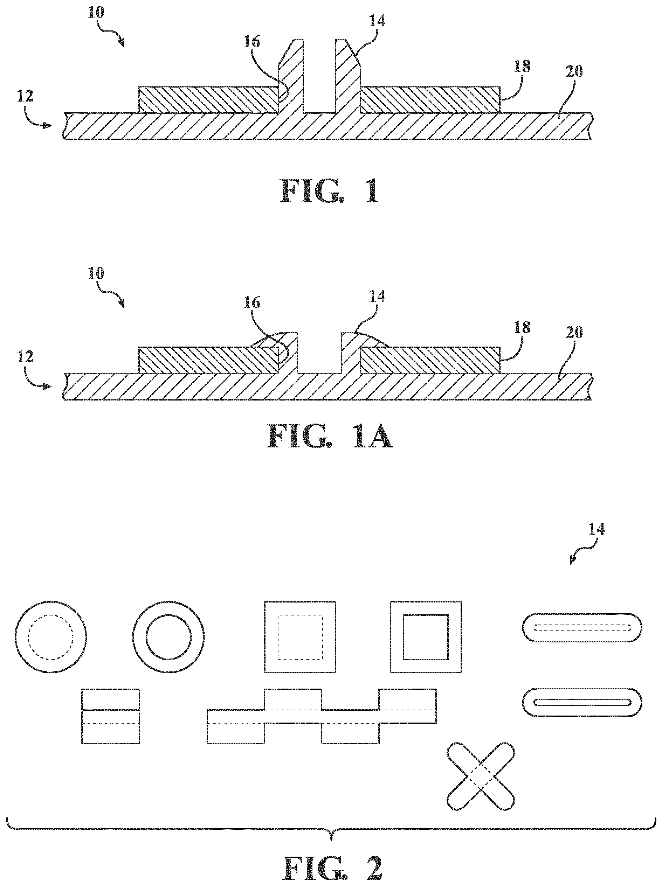

Depending on the area and attachment design and requirements the boss 14 can have any of a variety of predetermined shapes such as those shown in Figure 2. Typically, these bosses are hollow to provide improved ultrasonic flaring for attachment, however, solid bosses are also employed without deviating from the scope of the present invention.

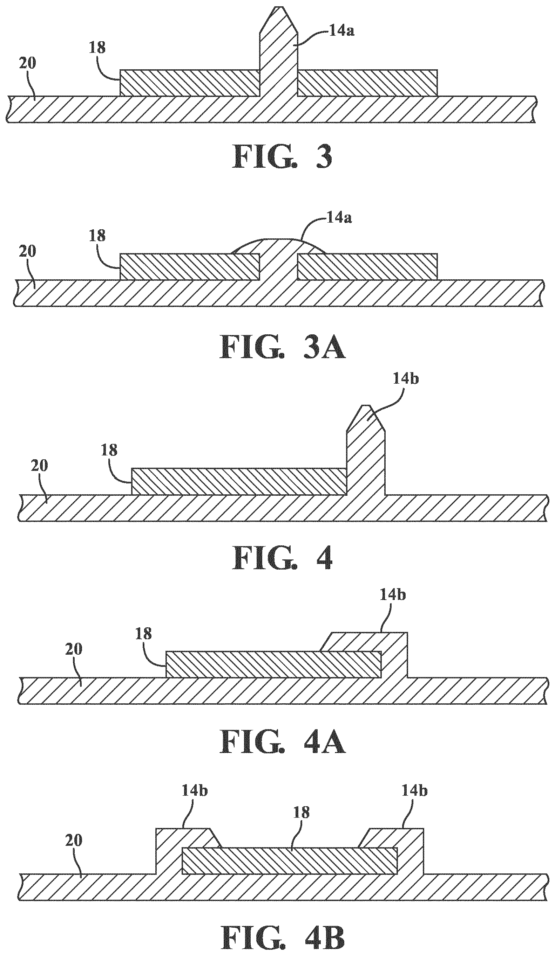

For instance, in Figure 3, a solid round boss is shown which is mushroomed over for securing the support 18 to the plastic of polymer panel 20 as shown in Figure 3a.

Referring now to Figures 4, 4a and 4b there is shown a rectangular cross-section solid boss 14b that is folded over the support 18. A plurality of these bosses 14b are typically used for securing the support 18 to the polymer panel 20 as shown in Figure 4b.

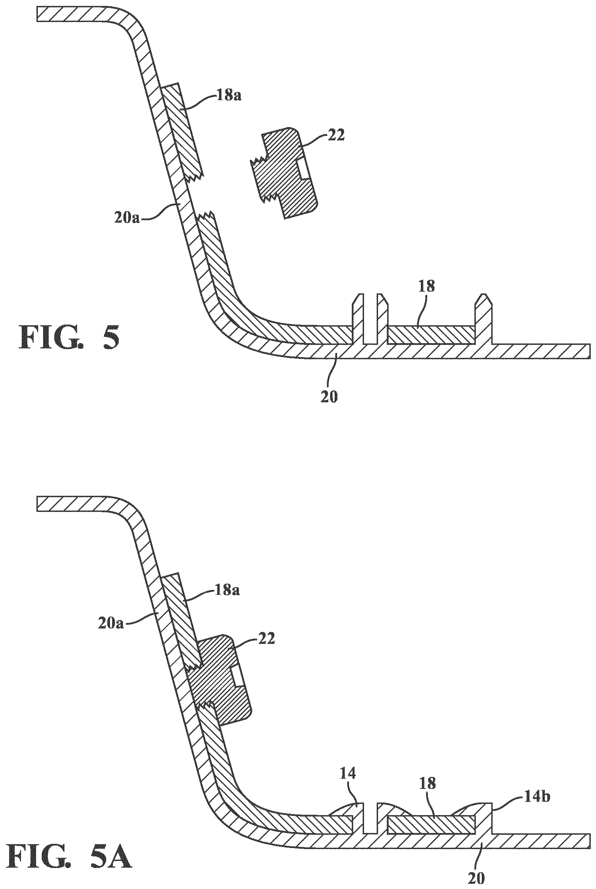

Figures 5 and 5a show an embodiment which includes an optional attachment fastener 22 which is attachable in a non-load bearing area 18a of the support 18. Which allows additional securement to a non-load bearing wall 20a of the inner polymer panel 20. Fastener 22 is either spin welded or ultrasonically welded to the panel 20 to provide additional securement to the assembly as shown in Figure 5a.

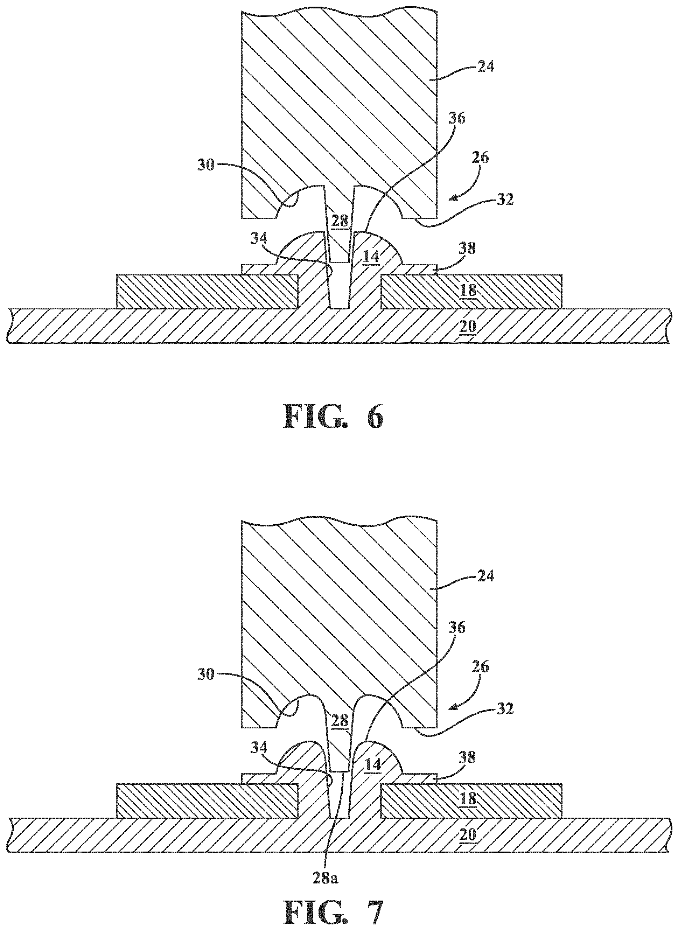

Referring now to Figure 6, there is shown a detailed drawing of a sonotrode attachment method of the present invention. A sonotrode 24 is typically used for attachment of the support 18 to the panel 20 by way of flaring of the boss 14. The sonotrode is a method of ultrasonically deforming the boss to "mushroom" the head of the boss 14 for attachment of the support 18 to the panel 20. It is important that the sonotrode 24 is insulated from the metal support 18. In the embodiment shown in Figure 6, the sonotrode insulating structure generally indicated at 26 is provided for insulating a sonotrode 24 of an ultrasonic welder from the support member during welding or the welding will be ineffectual. In the embodiment shown, sonotrode includes an enter flaring projection 28 a circular donut shaped area 30 with a circular peripheral outer wall 32. In operation, projection 28 flares out the inner aperture of the head portion 36 of the boss 14. Simultaneously the donut surface 30 flares out material which forms the outer peripheral wall of edge portion 38 which insulates the sonotrode 24 from touching or engaging the metal reinforcement 18.

The embodiment of Figure 7 is similar to Figure 6, however in this embodiment the bottom surface 28a of the projectile 28 is used to provide a reference for the sonotrode seating height for a predetermined flaring of the boss 14.

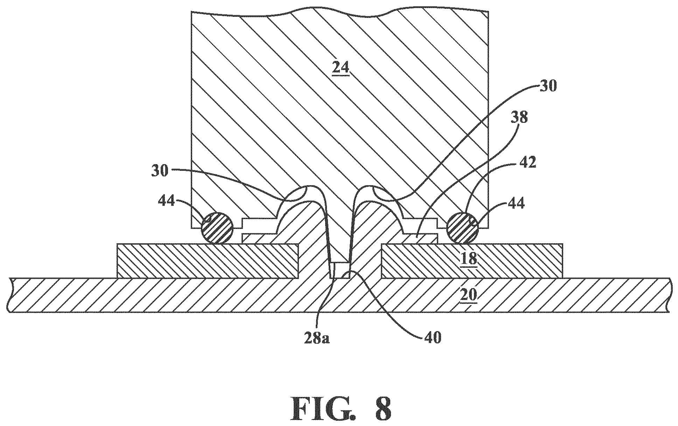

Referring now to Figure 8, alternatively the insulating structure used to insulate the sonotrode 24 from the metallic support is a non-metallic washer or O-ring 42 which is placed around the outer peripheral area of the boss 14 or retained in a suitable slot 44 in the sonotrode 24 itself.

In operation, the integrated and separate boss designs of the present invention allows panel molding, and bracket loading, and allows retention of reinforcement in all the critical areas. The unique boss design and sonotrode design will keep the metallic sonotrode isolated and avoid contact with the metallic reinforcement to allow proper ultrasonic welding. These features can be located behind class "A" surfaces and avoid read through and concerns of deterioration of surface. High retention load of the welding features creates a high performance and efficient design.

## Claims

1. A vehicle closure for a vehicle which requires a mechanical reinforcement of an area comprising at least one thermoplastic protrusion or boss on said vehicle closure structure and extending through an orifice in a support member which is ultrasonically and thermally deformed for securing the support member to the vehicle closure structure.

2. The vehicle closure structure of claim 1 wherein an insulating structure is provided for insulating a sonotrode of an ultrasonic welder from the support member during welding.

3. The vehicle closure structure of claim 2 wherein the insulating structure is a non-metallic washer; or
wherein the insulating structure is a part of the boss designed for insulating the sonotrode from a metallic or conductive support member.

4. The vehicle closure structure of any one of claims 1 to 3, wherein a separate thermoplastic boss is ultrasonically attached.

5. The vehicle closure structure of any one of claims 1 to 4, wherein the boss is mushroom deformed for securement.

6. The vehicle closure structure of any one of claims 1 to 5, wherein the rib/partial boss is formed over the reinforcement for securement.

7. A method of attaching a mechanical reinforcement to a thermoplastic vehicle closure structure comprising the steps of:
providing a thermoplastic vehicle closure member with at least one thermoplastic protrusion or boss thereon;
providing a metal reinforcement member which includes an orifice corresponding to the protrusion or boss on said thermoplastic wherein the protrusion or boss fits through the orifice in the metal reinforcement member;
providing a sonotrode which includes structure for avoiding contact with the metal reinforcement member during sonic welding of the protrusion or boss for providing attachment between the thermoplastic vehicle closure structure and the metal reinforcement; and,
attaching the metal reinforcement structure to thermoplastic vehicle closure structure by using the sonotrode to mushroom the protrusion or boss via ultrasonic and/or thermal deformation of the protrusion or boss which fastens the metal reinforcement to the thermoplastic vehicle closure structure.

8. The method of claim 7, wherein the vehicle closure structure is selected from the group of a liftgate door, trunk door, frunk door, vehicle hood and a spoiler.

9. The method of claim 7 or 8 wherein the metal reinforcement is selected from the group of a door latch, hinge, lift cylinder, spoiler attachment.

10. The method of any one of claims 7 to 9, wherein an insulating structure is provided for insulating a sonotrode of an ultrasonic welder from the support member during welding.

11. The method of claim 10, wherein the insulating structure is a non-metallic washer; or
wherein the insulating structure is a part of the boss designed for insulating the sonotrode from a metallic or conductive support member.

12. The method of any one of claims 7 to 11, wherein a separate thermoplastic boss is ultrasonically attached to the vehicle closure structure prior to or during ultrasonic welding.

13. The method of any one of claims 7 to 12, wherein the boss is mushroom deformed for securement.

14. The method of any one of claims 7 to 13, wherein the rib/partial boss is formed over the reinforcement for securement.
